# EUROPÄISCHE PATENTSCHRIFT

(11) **EP 0 512 947 B1**
(45) Veröffentlichungstag und Bekanntmachung des Hinweises auf die Patenterteilung: **22.01.1997**
(21) Anmeldenummer: 92810296.1
(22) Anmeldetag: 24.04.1992
(51) Int. Cl.: C08G 18/66, C08G 18/48

(54) **Polyolkomponente für die Herstellung von Polyurethanformkörpern**
Polyol components for the preparation of molded articles of polyurethanes
Composants polyols pour la préparation d'articles moulés de polyuréthane

(30) Priorität: 03.05.1991 CH 1324/91
(43) Veröffentlichungstag der Anmeldung: 11.11.1992
(73) Patentinhaber: Ciba SC Holding AG, 4057 Basel (CH)
(72) Erfinder: Spitzer, Martin, Dr., W-7801 Ehrenkirchen-Norsingen (DE)

(56) Entgegenhaltungen:
- US-A- 3 772 221
- US-A- 3 836 487

## Beschreibung

Die Erfindung betrifft eine Polyolkomponente, insbesondere für die Umsetzung mit Polyisocyanaten der Diphenylmethanreihe, Reaktionsgemische enthaltend die genannten Polyolkomponenten und Polyisocyanate, ein Verfahren zur Herstellung von Polyurethanformkörpern unter Verwendung dieser Reaktionsgemische und Polyurethanformkörper, erhältlich aus den beschriebenen Reaktionsgemischen.

Bei der Herstellung von Polyurethanformkörpern aus einer Polyisocyanat- und Polyolkomponente werden in der Praxis heute fast ausschliesslich Polyisocyanate der Diphenylmethanreihe eingesetzt. Zur Steuerung der Eigenschaften des Polyurethanmaterials enthält die Polyolkomponente oftmals Gemische aus zwei oder mehreren verschiedenen Polyolen, wobei sich die Polyole z. B. in ihrer Funktionalität und in ihrem Molekulargewicht mehr oder weniger stark unterscheiden können. Je nach der Zusammensetzung des Polyolgemisches können so z. B. die mechanischen oder thermischen Eigenschaften von Polyurethanformkörpern gesteuert werden, aber auch die maximale Verarbeitungszeit des Reaktionsgemisches aus Polyisocyanat- und Polyolkomponente und der Verlauf der Aushärtung des Gemisches. Oftmals werden z. B. Gemische eingesetzt, die zumindest ein niedrigmolekulares und ein langkettiges Polyol enthalten. Das niedrigmolekulare Polyol steigert unter anderem die Härte des Polyurethanmaterials, das langkettige seine Zähigkeit. Selbstverständlich wirkt sich die Zusammensetzung einer Polyolkomponente auch auf deren eigene Eigenschaften aus, wie z. B. auf ihre Lagerfähigkeit. Aus den genannten Gründen sind schon viele unterschiedliche Polyolzusammensetzungen für die Herstellung von Polyurethanmaterialien beschrieben worden.

Aus der US-A-3,993,576 ist beispielsweise eine gegen Entmischung besonders stabile und daher gut lagerfähige Polyolzusammensetzung bekannt. Sie enthält 5 bis 50 Gew.-% eines niedrigmolekularen Polyols, ausgewählt aus einer Gruppe, die bestimmte Diole und Glycerin umfasst, 50 bis 95 Gew.-% eines langkettigen Polyols der Funktionalität 2 bis 4 mit einer Hydroxyläquivalentmasse zwischen 650 und 3000 (entsprechend einem Molekulargewicht zwischen 1300 und 12000) und ein drittes Polyol, nämlich ein Polypropylenglycol oder Poly-(1,2-butylenglycol) mit einer Hydroxyläquivalentmasse bis ca. 80 (entsprechend einem Molekulargewicht bis ca. 160). Aus einem Reaktionsgemisch, das aus einem Polyisocyanat der Diphenylmethanreihe und einer der genannten Polyolkomponenten besteht, können in der Regel ohne weitere verstärkende Zusätze, beispielsweise von Fasermaterialien, keine Polyurethanformkörper mit einem Biegeelastizitätsmodul über 1000 N/mm² hergestellt werden. Ausserdem durchlaufen Reaktionsgemische mit einem niedrigmolekularen Polyol niedriger Funktionalität während der Härtung eine ausgedehnte Sprödphase.

Bei der genannten Sprödphase handelt es sich um eine Zeitphase, in der der aus dem flüssigen Reaktionsgemisch frisch gebildete Formkörper zwar schon im festen Zustand ist, so dass er an sich aus der Form genommen werden könnte, der Formkörper aber noch sehr spröde ist. Das Auftreten einer Sprödphase bei der Herstellung von Polyurethanformkörpern ist ein häufig auftretendes Problem, wenn Reaktionsgemische auf Basis von Polyisocyanaten der Diphenylmethanreihe und Polyolkomponenten des Standes der Technik verwendet werden. Relativ lange Sprödphasen, je nach Reaktivität des Reaktionsgemisches beispielsweise einige Minuten nach Zusammengeben der Komponenten beginnend und bis zu mehrere Stunden andauernd, treten insbesondere dann auf, wenn die Aushärtung des Gemisches bei Raumtemperatur oder nur mässig erhöhter Temperatur erfolgt. Dies gilt ganz besonders für Polyurethanmaterial, das unter Zuhilfenahme von niedrigmolekularen Polyolen hergestellt wird. Die Dauer der Sprödphase ist im allgemeinen um so länger, je länger die Topfzeit des verwendeten Reaktionsgemisches aus Polyisocyanat und Polyolen ist. Die Sprödphase ist dabei im Regelfall wesentlich länger als der Zeitraum, der nötig ist, das Reaktionsgemisch in den festen Zustand zu überführen. Die Sprödphase ist besonders deshalb von Nachteil, weil ein Entformen während dieser Zeitperiode leicht zur Zerstörung des Formkörpers führen kann, da dabei die Formkörper oftmals einer relativ starken mechanischen Belastung unterworfen werden müssen. Auch nach der Entformung müssen die Formkörper bis zum Ende der Sprödphase noch relativ vorsichtig behandelt werden, um sie nicht zu beschädigen.

Eine weitere lagerungsstabile Polyolmischung ist aus der US-A-4,826,885 bekannt. Sie enthält ein kurzkettiges Diol, ein Polyoxypropylentriol mit einer Molekularmasse zwischen 2000 und 8000 und ein Polyoxypropylentriol mit einer Molekularmasse zwischen 300 und 900, wobei die Polyolmischung im wesentlichen keinen Polyoxyethylengehalt aufweist. Gemische aus den beschriebenen Polyolmischungen und Polyisocyanaten werden bei erhöhten Temperaturen ausgehärtet (75 - 93 °C).

Eine andere Polyolkomponente für die Umsetzung mit Polyisocyanaten ist z. B. aus der EP-A-0 265 781 (= US-A-5,028,684) bekannt. Sie enthält eine Polyhydroxylverbindung des Molekulargewichtsbereiches 62 bis 499, die z. B. eine Funktionalität zwischen 2 und 6 aufweisen kann, ein Polyetherpolyol des Molekulargewichtsbereiches 500 bis 999 und gegebenenfalls eine Polyetherkomponente mit mindestens zwei gegenüber Isocyanatgruppen reaktionsfähigen Gruppen und einem Molekulargewicht zwischen 1000 und 10000. Das Polyetherpolyol des Molekulargewichtsbereiches 500 bis 999 muss dabei mindestens 30 Gew.-% an in Polyetherketten eingebaut vorliegenden Ethylenoxideinheiten aufweisen. Durch Umsetzung der beschriebenen Polyolzusammensetzungen mit einem Polyisocyanat der Diphenylmethanreihe kann ein Polyurethanmaterial mit einem Biegeelastizitätsmodul über 1800 N/mm² hergestellt werden. Auch die hier beschriebenen Reaktionsgemische härten aber bei Raumtemperatur mit einer Sprödphase aus. Daher werden zur Herstellung von Formkörpern aus den Mischungen Formwerkzeuge eingesetzt, deren Temperatur zumindest über 40 °C, bevorzugt zwischen 50 und 70 °C, liegt. Dies stellt erhöhte Anforderungen an den Formenbau. Ein zweiter wesentlicher Nachteil ist, dass es aufgrund der Abkühlung des Formkörpers zu beträchtlichen Massungenauigkeiten kommen kann.

Aus dem U.S.-Patent US-A-3,772,221 ist weiterhin ein Polyolgemisch bekannt, das ein Quadrol, z. B. Pentaerythrit, ein mit Ethylenoxid verkapptes trifunktionelles Polypropylenpolyol mit einem Molekulargewicht zwischen 2000 und 7000 sowie ein Polytetrahydrofuran mit einem Molekulargewicht zwischen 500 und 1000 enthält. Neben diesen Polyolen enthält das genannte Polyolgemisch obligatorisch ein Diol, ausgewählt aus Ethylenglycol, Diethylenglycol und 1,4-Butandiol. Es wird zusammen mit Toluoldiisocyanat zur Herstellung von Formkörpern verwendet, wobei die Form auf eine Temperatur zwischen 30 und 55 °C erwärmt werden muss.

Aus dem U.S.-Patent US-A-3,836,487 ist darüberhinaus die Umsetzung von Polyisocyanaten, auch solchen der Diphenylmethanreihe, mit einem Polyolgemisch bekannt, dass ein Polyetherpolyol mit einem Molekulargewicht zwischen 700 und 1500 sowie ein Triol oder Quadrol mit einem Molekulargewicht unter 500 enthält.

Die Aufgabe der vorliegenden Erfindung ist es nun, eine neue Zusammensetzung aus mehreren Polyolen zur Verfügung zu stellen, die einmal Lagerstabilität und die Möglichkeit in sich vereinigt, Polyurethanformkörper mit guten mechanischen Eigenschaften herstellen zu können, wenn sie als Polyolkomponente für Polyisocyanate der Diphenylmethanreihe verwendet wird. Speziell sollen die Polyole in der Polyolkomponente auch bei mehrwöchiger Lagerung nicht zur Entmischung neigen, und die Komponente soll mit den genannten Polyisocyanaten zu Polyurethanformkörpern mit einem Biegeelastizitätsmodul von mehr als 1000 N/mm² verarbeitet werden können, ohne dass dazu Verstärkungsmittel, wie Fasermaterialien, notwendig sind. Ausserdem sollen Reaktionsgemische mit der vorzuschlagenden Polyolkomponente und Polyisocyanaten der Diphenylmethanreihe schon bei Temperaturen im Bereich von 15 bis 40 °C, vorzugsweise bei Raumtemperatur aushärten, so dass keine erwärmten Formen erforderlich sind. Bei der Härtung soll weiterhin keine in der Praxis feststellbare Sprödphase auftreten.

Erfindungsgemäss wird diese Aufgabe dadurch gelöst, dass eine speziell ausgewählte Polyolkomponente, insbesondere für die Umsetzung mit Polyisocyanaten der Diphenylmethanreihe, zur Verfügung gestellt wird, die a) ein Polyol mit einer Hydroxyläquivalentmasse bis 150 und einer Funktionalität von 4 bis 8, b) ein Polyetherpolyol mit einer Hydroxyläquivalentmasse über 1900 und einer Funktionalität von 2 bis 4 und c) ein Polypropylenglycol mit einer Funktionalität von 2 bis 3 oder ein Polytetrahydrofuran, die jeweils eine Hydroxyläquivalentmasse von 150 bis 500 aufweisen, oder ein Gemisch der beiden enthält, wobei es ausgeschlossen ist, dass die Polyolkomponente Ethylenglycol, Diethylenglycol oder 1,4-Butandiol enthält.

Die erfindungsgemässen Polyolkomponenten bilden eine stabile Flüssigphase aus, die sich auch während einer mehrwöchigen, z. B. 3 bis 6 Monate währenden Lagerung bei Raumtemperatur nicht entmischt. Lediglich bestimmte Feststoffe, die den Komponenten zugesetzt werden können, z. B. Füllstoffe, können sich während der Lagerung absetzen, können jedoch schnell und ohne Aufwand wieder aufgerührt werden. Ausserdem leiden in diesen Fällen die Verarbeitungseigenschaften nicht aufgrund einer ungenügenden Homogenität der erfindungsgemässen Polyolkomponenten. Zusammen mit Polyisocyanaten der Diphenylmethanreihe können mit den vorliegenden Polyolkomponenten Polyurethangusskörper hergestellt werden, deren Biegeelastizitätsmodul zumindest oberhalb 1000 N/mm², in manchen Fällen auch weit oberhalb 2000 N/mm², liegt, und die auch gute Werte für Schlagbiege- und Kerbschlagzähigkeit aufweisen. Das Polyurethanmaterial durchläuft keine Sprödphase, auch während der Aushärtung bei Raumtemperatur oder nur mässig erhöhter Temperatur, sondern Formkörper aus dem Material bleiben während der gesamten Aushärtungszeit elastisch.

Als Bestandteil a) der erfindungsgemässen Polyolkomponenten kommen z. B. Polyhydroxylverbindungen mit 4 bis 8 Hydroxylgruppen in Frage, z. B. Erythrit, Pentaerythrit; Pentite, wie Arabit, Adonit oder Xylit; Hexite, wie Sorbit, Mannit oder Dulcit, die unterschiedlichsten Zuckerarten, z. B. Saccharose, oder auch Zucker- und Stärkederivate. Besonders gut verwendet werden können niedermolekulare Umsetzungsprodukte von Polyhydroxyverbindungen, wie den genannten, mit Ethylen- und/oder Propylenoxid, ebenso wie die niedermolekularen Umsetzungsprodukte anderer Verbindungen, die zur Reaktion mit Ethylen- und/oder Propylenoxid fähige Gruppen in genügender Anzahl enthalten, z. B. von Polyaminen, wie insbesondere Ammoniak, Ethylendiamin, 1,4-Diaminobenzol, 2,4-Diaminotoluol, 2,4'-Diaminodiphenylmethan, 4,4'-Diaminodiphenylmethan, 1-Methyl-3,5-diethyl-2,4-diaminobenzol und/oder 1-Methyl-3,5-diethyl-2,6-diaminobenzol. Weitere geeignete Polyamine sind in der EP-A-0 265 781 aufgeführt.

Die Untergrenze für die Hydroxyläquivalentmasse der als Bestandteil a) vorgesehenen Polyole liegt bevorzugt bei 60. Besonders gute Ergebnisse werden erreicht, wenn die Hydroxyläquivalentmasse über 70 liegt.

Ganz besonders bevorzugt als Bestandteil a) der erfindungsgemässen Polyolkomponenten sind Umsetzungsprodukte von Propylenoxid mit Aminen, insbesondere mit Ethylendiamin, und Polyhydroxylverbindungen, insbesondere Zuckern. Solche Produkte sind auch kommerziell erhältlich, z. B. unter der Bezeichnung Quadrol L® und Lupranol 3321®.

Die erfindungsgemässen Polyolkomponenten können z. B. 20 bis 80 Gew.-%, insbesondere 30 bis 65 Gew.-%, des Bestandteils a) enthalten.

Als Bestandteil b) der erfindungsgemässen Polyolkomponenten werden Polyetherpolyole eingesetzt. Diese in der Technik von Polyurethanen üblichen Komponenten (s. Ullmanns Encyclopädie der technischen Chemie, 4. Aufl. Bd. 19, Verlag Chemie GmbH, Weinheim 1980, S 31 - 38 und S. 304, 305) können beispielsweise durch Reaktion eines Starters mit Alkylenoxiden, z. B. mit Ethylen-, Propylen- oder Butylenoxiden, oder Tetrahydrofuran erhalten werden. Als Starter kommen dabei alle üblicherweise zur Herstellung von Polyetherpolyolen einer Funktionalität von 2 bis 4 geeigneten Starter in Frage, z. B. Wasser, aliphatische, cycloaliphatische oder aromatische Polyhydroxyverbindungen mit 2 bis 4 Hydroxylgruppen, wie Ethylenglycol, Propylenglycol, Butandiole, Hexandiole, Octandiole, Dihydroxybenzole oder Bisphenole, z. B. Bisphenol A, Trimethylolpropan oder Glycerin, Erythrit oder Pentaerythrit, oder entsprechende Polyamine, z. B. Ethylendiamin oder Dianiline. Bevorzugt sind Polyetherpolyole auf Basis von Ethylenoxid und/oder Propylenoxid, wobei es sich bei Ethylen-/Propylenoxidcopolymeren sowohl um statistische als auch um Blockcopolymere handeln kann. Das Verhältnis von Ethylenoxid zu Propylenoxid kann dabei in weiten Grenzen variieren. So können z. B. nur die endständigen Hydroxylgruppen der Polyetherpolyole mit Ethylenoxid umgesetzt sein (Endverkappung). Der Gehalt der für den Bestandteil b) geeigneten Polyetherpolyole an Ethylenoxideinheiten kann z. B. aber auch Werte bis 75 oder 80 Gew.-% annehmen. Meist wird es zweckmässig sein, wenn die Polyetherpolyole zumindest mit Ethylenoxid endverkappt sind. Sie weisen dann nämlich endständige primäre Hydroxylgruppen auf, die reaktiver sind als die von der Umsetzung mit Propylenoxid herrührenden sekundären Hydroxylgruppen.

Auch Polyetherpolyole, die feste organische Füllstoffe in disperser Verteilung und chemisch teilweise an den Polyether gebunden enthalten, wie Polymerpolyole und Polyharnstoffpolyole, sind als Bestandteil b) der erfindungsgemässen Polyolkomponenten geeignet. Bei Polymerpolyolen handelt es sich bekanntlich um Polymerdispersionen, die durch radikalische Polymerisation von geeigneten olefinischen Monomeren, insbesondere Acrylnitril, Styrol oder Gemische der beiden, in einem als Pfropfgrundlage dienenden Polyether hergestellt sind. Polyharnstoff-Polyole (PHD-Polyether) stellen eine Dispersion von Polyharnstoffen, die durch Reaktion von Polyisocyanaten mit Polyaminen in Gegenwart von Polyetherpolyolen erhältlich ist, und wobei ebenfalls eine teilweise chemische Verknüpfung des Polyharnstoffmaterials mit den Polyetherpolyolen über die Hydroxylgruppen an den Polyetherketten stattfindet. Polyole, wie die in diesem Abschnitt genannten, sind z. B. in Becker/Braun "Kunststoffhandbuch", Bd. 7 (Polyurethane), 2. Aufl., Carl Hanser Verlag, München Wien (1983), S.76, 77 näher beschrieben.

Die Hydroxyläquivalentmasse der Polyetherpolyole für b) soll über 1900 betragen. Die Obergrenze für die Äquivalentmasse liegt bevorzugt bei 3000. Die Menge des Bestandteils b) beträgt im allgemeinen 3 bis 40, vorzugsweise 5 bis 30, Gew.-%, bezogen auf die gesamte Polyolkomponente.

Besonders bevorzugt als Bestandteil b) sind di- und trifunktionelle Polyole, insbesondere mit Trimethylolpropan gestartete Polyole auf Basis von Gemischen aus Ethylen- und Propylenoxid. Polyetherpolyole, auch wie die letztgenannten, sind ebenfalls kommerziell erhältlich.

Der Bestandteil c) ist im allgemeinen in einer Menge von 10 bis 30, insbesondere von 10 bis 20, Gew.-%, bezogen auf die gesamte Polyolkomponente, vorhanden.

Für c) geeignete Polypropylenglycole sind ähnlich den schon oben für den Bestandteil b) beschriebenen Polyetherpolyolen aus di- und trifunktionellen Startern, z. B. denen, die oben genannt wurden, und Propylenoxid zugänglich. Sie sind ebenso wie ihre Herstellung dem Fachmann bekannt und in verschiedener Form auch im Handel.

Dies gilt auch für erfindungsgemäss geeignete Polytetrahydrofurane (Handelsname z. B. Polymeg®). Herstellung und Eigenschaften solcher Polytetrahydrofurane sind z. B. in Ullmanns Encyclopädie der technischen Chemie, 4. Aufl., Bd. 19, Verlag Chemie GmbH, Weinheim 1980, S. 297 - 299 näher beschrieben sind.

Polyolkomponenten, die als Bestandteil c) nur Polytetrahydrofuran enthalten, stellen eine besondere Ausführungsform der Erfindung dar. Die Verwendung von Polytetrahydrofuran alleine ist im allgemeinen für maschinelle Herstellungsverfahren von Polyurethanformkörpern bevorzugt, weil Polytetrahydrofurane nur primäre Hydroxylgruppen aufweisen und deshalb besonders reaktiv sind. Der Gehalt der Gesamtpolyolkomponente an Polytetrahydrofuran beträgt dann vorzugsweise 10 bis 20 Gew.-%. Polytetrahydrofurane neigen allerdings in manchen Polyolzusammenstellungen bei Raumtemperatur oder nur mässig erhöhter Temperatur leicht dazu, fest zu werden. In diesen Fällen kann es auch zweckmässig sein, als Bestandteil c) ein Gemisch aus Polytetrahydrofuran und Polypropylenglycol einzusetzen, da Polypropylenglycol das Auskristallisieren von Polytetrahydrofuran in vielen Fällen verhindern kann. Der Anteil an Polypropylenglycol liegt dann bevorzugt oberhalb 25 Gew.-%, z. B. im Bereich von 30 bis 80 Gew.-%, bezogen auf das Gemisch von Polytetrahydrofuran und Polypropylenglycol.

Für die Herstellung von Polyurethanformkörpern durch Handverguss eignen sich besonders die Polyolkomponenten, die nur Polypropylenglycole als Bestandteil c) aufweisen.

Eine weitere bevorzugte Ausführungsform der erfindungsgemässen Polyolkomponenten enthält als weiteren Bestandteil d) zusätzlich zu den oben beschriebenen Bestandteilen noch ein Polyetherpolyol mit einer Funktionalität von 2 - 4 und einer Hydroxyläquivalentmasse, die zwischen derjenigen der als Bestandteile b) und c) eingesetzten Polyetherpolyole liegt. Die Hydroxyläquivalentmasse dieses Polyetherpolyols kann also zwischen 500 und 1900 liegen, liegt aber bevorzugt zwischen 1000 und 1700. Von der chemischen Zusammensetzung her gilt für diese Polyetherpolyole ebenfalls das, was oben für die als Bestandteil b) geeigneten Polyetherpolyole gesagt wurde, so dass an dieser Stelle nur auf die dortigen Angaben verwiesen wird. Der Bestandteil d) der erfindungsgemässen Polyolkomponenten liegt vorzugsweise in bis zu 30 Gew.-%, bezogen auf die Gesamtpolyolkomponente vor. Besonders bevorzugt werden 5 bis 30 Gew.-% davon.

Die durchschnittliche Hydroxyläquivalentmasse der gesamten erfindungsgemässen Polyolkomponente soll im allgemeinen zwischen 150 und 260 liegen; bevorzugt sind Werte von 170 bis 200.

Weiterhin können die Polyolzusammensetzungen übliche für die Polyurethantechnologie geeignete Zusatzstoffe in den üblichen Mengen enthalten. Dies sind z. B. Katalysatoren, sowohl basische, wie tertiäre Amine, z. B. N-Methylethanolamine, wie insbesondere N-Methyldiethanolamin, Triethanolamin, Dibenzylmethylamin, Diazabicyclooctan usw., als auch saure, z. B. zinnorganische Verbindungen, wie Dibutylzinnlaurat. Als weitere Zusatzstoffe seien genannt: Antischaummittel, z. B. Polysilicone, oberflächenaktive Stoffe, wie Rizinusöl, Trocknungsmittel, z. B. Molekularsiebe auf Zeolithbasis, interne Formtrennmittel, Füllstoffe, Farbstoffe, Pigmente, insbesondere Titandioxid, Flammschutzmittel oder Treibmittel, insbesondere Wasser. Weitere geeignete Zusatzstoffe sind auch in Becker/Braun "Kunststoffhandbuch", Bd. 7 (Polyurethane), 2. Aufl., Carl Hanser Verlag, München Wien (1983) angeführt. Der Gesamtgehalt der erfindungsgemässen Polyolkomponenten an Zusatzstoffen kann beispielsweise 0 bis 30 Gew.-% betragen.

Erfindungsgemässe Polyolkomponenten können zur manuellen und zur maschinellen Herstellung von Polyurethanformkörpern verwendet werden.

Dazu wird zunächst aus einem Polyisocyanat der Diphenylmethanreihe und zumindest einer der erfindungsgemässen Polyolkomponenten, gegebenenfalls unter Zugabe von Hilfs- und Zusatzstoffen, wie beispielsweise den im vorigen Abschnitt genannten, ein Reaktionsgemisch hergestellt.

Die Erfindung betrifft daher auch ein Reaktionsgemisch zur Herstellung von Polyurethanformkörpern, enthaltend ein Polyisocyanat der Diphenylmethanreihe und wenigstens eine Polyolkomponente, wie oben beschrieben, wobei die Menge von Polyisocyanat so gewählt ist, dass die Isocyanatkennzahl des Reaktionsgemisches (Quotient aus der Anzahl von Isocyanatgruppen und der Anzahl von mit Isocyanatgruppen reaktionsfähigen Gruppen im Reaktionsgemisch, multipliziert mit 100) zwischen 70 und 130 liegt.

Unter "Polyisocyanat der Diphenylmethanreihe" werden hier Derivate des Diphenylmethans verstanden, die durchschnittlich mindestens zwei freie Isocyanatgruppen pro Molekül aufweisen. Bevorzugt werden im allgemeinen Polyisocyanate, die bei Umgebungstemperatur oder schon bei leicht erhöhten Temperaturen flüssig sind. Beispiele für geeignete Polyisocyanate sind monomere Diisocyanatodiphenylmethanisomere (MDI), wie 4,4'-Diisocyanatodiphenylmethan, 2,4'-Diisocyanatodiphenylmethan oder 2,2'-Diisocyanatodiphenylmethan, oder deren Gemische, wie z. B. ein Gemisch aus 60 Gew.-% des 2,4'- und 40 Gew.-% des 4,4'-Isomeren. Ebenfalls geeignet sind MDI-Polymertypen, also Substanzen der allgemeinen Formel OCN-[C₆H₄]-CH₂-[[-[C₆H₃(NCO)]-CH₂-]]ₙ-[C₆H₄]-NCO, worin n im allgemeinen Werte bis 8 annimmt. Gegebenenfalls können die genannten Polymertypen auch im Gemisch mit Monomeren eingesetzt werden. So kann es sich z. B. um ein Gemisch mit 30 bis 70 Gew.-% Zweikernanteil (n = 0), 15 bis 40 Gew.-% Dreikernanteil (n = 1) und gegebenenfalls 15 bis 30 Gew.-% Höherkernanteil (n > 1) handeln. Solche und ähnliche Gemische sind ebenfalls im Handel erhältlich. Auch gut geeignet sind urethanisierte Diisocyanatodiphenylmethane, wie sie beispielsweise durch Vorreaktion von Diisocyanatodiphenylmethan mit niedermolekularen Di- oder Triolen erhalten werden können, carbodiimidisierte Diisocyanatodiphenylmethane oder urethanisierte oder carbodiimidisierte Gemische von Diisocyanatodiphenylmethanderivaten, wie die oben beschriebenen. Verwendet werden können auch Diisocyanatodiphenylmethanderivate mit Biuret- oder Allophanatgruppen.

Besonders gute Eigenschaften weist eine Polyisocyanatkomponente auf, die aus 5 bis 20 Gew.-% carbodiimidisiertem Diisocyanatodiphenylmethan, 2 bis 10 Gew.-% Diisocyanatodiphenylmethan-Polymertypen der allgemeinen Formel OCN-[C₆H₄]-CH₂-[[-[C₆H₃(NCO)]-CH₂-]]ₙ-[C₆H₄]-NCO, worin n ≥ 1 ist, und 70 bis 93 Gew.-% eines Gemisches aus monomeren Diisocyanatodiphenylmethanisomeren besteht, wobei dieses Gemisch wiederum aus 45 bis 90 Gew.-% 4,4'-Diisocyanatodiphenylmethan und 10 bis 55 Gew.-% 2,4'- und 2,2'-Diisocyanatodiphenylmethan besteht. Als Beispiel für eine Polyisocyanatkomponente der genannten Zusammensetzung sei ein Gemisch aus ca. 70 Gew.-% Desmodur® CD und 30 Gew.-§lo Desmodur® VL 50 angeführt. Polyisocyanatkomponenten wie diese weisen nämlich nur eine äusserst schwache Eigenfärbung auf (hellbeige) und ermöglichen es daher, besonders auch hellfarbige Formkörper sehr farbrein herzustellen. So können beispielsweise bei Verwendung einer weisspigmentierten Polyolkomponente praktisch reinweisse Formkörper erhalten werden. Um entsprechend farbreines Polyurethanmaterial mit Hilfe von Polyisocyanaten der Diphenylmethanreihe herzustellen, wurde bisher möglichst reines 4,4'-Diisocyanatodiphenylmethan als Polyolkomponente verwendet. Entsprechend reines 4,4'-Diisocyanatodiphenylmethan neigt aber dazu, bei Temperaturen von 0 °C bis Raumtemperatur auszukristallisieren und kann daher beispielsweise nicht bei niedrigen Temperaturen gelagert werden. Eine farbneutrale Polyisocyanatkomponente, wie oben beschrieben, bleibt jedoch auch bei tieferen Temperaturen des oben genannten Bereichs fliessfähig. Die Erfindung betrifft daher auch ein Reaktionsgemisch, enthaltend die genannte Polyisocyanatkomponente.

Die erfindungsgemässen Reaktionsgemische enthalten das Polyisocyanat in üblicher Menge, im allgemeinen entsprechend einer Isocyanatkennzahl (Quotient aus der Anzahl von Isocyanatgruppen und der Anzahl von mit Isocyanatgruppen reaktionsfähigen Gruppen im Reaktionsgemisch, multipliziert mit 100) zwischen 70 und 130, bevorzugt entsprechend einer Isocyanatkennzahl zwischen 90 und 110.

Eine weitere besonders gute Ausführungsform der erfindungsgemässen Reaktionsgemische enthält N-Methyldiethanolamin als Katalysator. Da diese Verbindung nämlich zwei Hydroxylgruppen aufweist, nimmt sie wie ein Polyol an der Polyurethanbildung teil und kann sich somit während der Lebenszeit des Polyurethans sich nicht aus dem Material verflüchtigen (ausschwitzen).

Die Reaktionsgemische weisen im allgemeinen sehr niedrige Mischviskositäten auf, z. B. im Bereich von 500 bis 1500 mPa·s.

Die maximal möglichen Verarbeitungszeiten (Topfzeiten) der Reaktionsgemische liegen je nach verwendeter Polyisocyanat- und Polyolkomponente und der Isocyanatkennzahl des Gemisches im allgemeinen zwischen 15 Sekunden und 180 Minuten. Eine gewünschte maximale Verarbeitungszeit kann besonders günstig und bei gleichbleibender Polyisocyanatkomponente und gleichbleibendem Mischungsverhältnis von Polyisocyanat zum Gesamtanteil an Polyol im Reaktionsgemisch durch Verwendung unterschiedlicher Mengen verschiedener erfindungsgemässer Polyolkomponenten eingestellt werden, die jeweils eine andere Verarbeitungszeit ermöglichen. Eine besonders günstige Ausführungsform bilden daher erfindungsgemässe Reaktionsgemische, die ein Polyisocyanat der Diphenylmethanreihe und in einer insgesamt zur Härtung des Gemisches ausreichenden Menge wenigstens zwei verschiedene Polyolkomponenten des oben beschriebenen Typs enthalten, die, jeweils allein mit dem eingesetzten Polyisocyanat in einem Gemisch gleicher Isocyanatkennzahl verwendet, unterschiedliche maximale Verarbeitungszeiten ermöglichen, wobei das Reaktionsgemisch eine Verarbeitungszeit aufweist, die zwischen den mit den einzelnen Polyolkomponenten erreichbaren liegt. In manchen Fällen kann es dabei zweckmässig sein, wenn die verschiedenen Polyolkomponenten verschiedenartig eingefärbt sind, da dann im allgemeinen aus der sich ergebenden Mischfarbe des Reaktionsgemisches die maximal mögliche Verarbeitungszeit des Gemisches besonders leicht bestimmt werden kann.

Reaktionsgemische mit längerer Verarbeitungszeit sind, wie üblich, insbesondere für die Herstellung und Verarbeitung von Hand geeignet, während Gemische mit kurzer Topfzeit zweckmässig sowohl maschinell abgemischt als auch maschinell nach den an sich bekannten, z. B. in Ullmanns Encyclopädie der technischen Chemie, 4. Aufl. Bd. 19, Verlag Chemie GmbH, Weinheim 1980, S. 316 ff beschriebenen Verfahrenstechniken, wie der Reaktionsspritzgusstechnik, der Vakuumvergusstechnik und anderer, zu Formkörpern weiterverarbeitet werden.

Gewünschtenfalls können die erfindungsgemässen Polyolkomponenten vor der Herstellung der Reaktionsgemische auch längere Zeit zwischengelagert werden, ohne dass sich die Flüssigphase entmischt, und können daher eingesetzt werden, ohne dass erst erneut die Bildung einer homogenen Emulsion aus den Polyolbestandteilen der Komponenten nötig wäre.

Einen Gegenstand der Erfindung bildet daher auch ein Verfahren zur Herstellung von Polyurethanformkörpern, bei dem eine Komponente auf Basis von Polyisocyanaten der Diphenylmethanreihe mit wenigstens einer der oben beschriebenen, gegebenenfalls zuvor zwischengelagerten Polyolkomponenten in einer Menge, dass die Isocyanatkennzahl des Reaktionsgemisches (Quotient aus der Anzahl von Isocyanatgruppen und der Anzahl von mit Isocyanatgruppen reaktionsfähigen Gruppen im Reaktionsgemisch, multipliziert mit 100) zwischen 70 und 130 liegt, und mit gegebenenfalls weiteren in der Polyurethantechnologie üblichen Zusatzstoffen zu einem Reaktionsgemisch, wie den beschriebenen, vermischt wird, die erhaltene Mischung geformt und zum Formkörper gehärtet wird.

Die Härtung erfolgt dabei im allgemeinen bei einer Temperatur zwischen 15 und 40 °C, besonders bevorzugt bei etwa Raumtemperatur, d. h. auch ohne Erwärmung der eingesetzten Form. Bevorzugt werden hierbei die oben beschriebenen Polyolkomponenten mit Bestandteil d) verwendet.

Einen weiteren Gegenstand der Erfindung stellen schliesslich Polyurethanformkörper dar, erhältlich aus einem der oben beschriebenen Reaktionsgemische.

Besonders bevorzugt sind Polyurethanformkörper, die keinen freien Weichmacher enthalten. Unter dem Begriff "freier Weichmacher" werden dabei konventionelle Weichmacherverbindungen verstanden, also solche, die keine funktionellen Gruppen aufweisen, die sich an der Umsetzung des Polyisocyanats mit den Polyolkomponenten beteiligen. Weichmacher dieses Typs, z. B. Adipinsäureester, Dibutyl- oder Dioctylphthalate, die häufig den Polyolkomponenten zur Homogenisierung und zur Steigerung der Elastizität des Polyurethanmaterials zugesetzt wurden, haben den Nachteil, dass sie langsam aus dem Material ausschwitzen, was zu einer ständig ansteigenden Versprödung des Polyurethanmaterials während seiner Lebensdauer führt. Aufgrund der speziellen Zusammensetzung der erfindungsgemässen Polyolkomponente sind solche konventionellen Weichmacher aber in alle Regel unnötig, so dass erfindungsgemässe Formkörper im Laufe ihres Lebens ihre Elastizitätseigenschaften kaum verändern.

Gemäss der Erfindung können besonders einfach Polyurethanformkörper wechselnder Grösse hergestellt werden. Ein besonderer Vorteil der vorliegenden Erfindung ist dabei, dass die Topfzeiten der erfindungsgemässen Reaktionsgemische besonders leicht gesteuert und in grosser Breite variiert werden können. Je grösser eine Form ist, desto länger ist nämlich im allgemeinen auch die Füllzeit, die für sie erforderlich ist. Die Topfzeit des verwendeten Reaktionsgemisches muss aber selbstverständlich zumindest etwas länger als die Füllzeit der verwendeten Form sein. Bei Lagerhaltung einer Polyisocyanatkomponente und zumindest zweier Polyolkomponenten, die unterschiedliche Topfzeiten mit dem Polyisocyanat ergeben, können aber, z. B. in der weiter oben beschriebenen Weise, schnell und in einfacher Weise auch maschinell den jeweiligen Erfordernissen angepasste Reaktionsgemische hergestellt werden, ohne dass dabei Änderungen der Eigenschaften des daraus hergestellten Polyurethanmaterials aufgrund eines geänderten Mischungsverhältnisses von Isocyanat zu Gesamtpolyol in Kauf genommen werden müssen.

Beispiel 1: Es wird eine Polyolkomponente aus 10 Gewichtsteilen eines Gemisches aus einem mit Sucrose und einem mit Glycerin gestarteten Polypropylenglycol mit einer mittleren Hydroxyläquivalentmasse von 140 (entsprechend CAS-Nr. 56731-02-3) als Bestandteil a) und den in Tabelle 1 angegebenen Gewichtsteilen eines mit Trimethylolpropan gestarteten Polyalkylenglycols, der aus Ethylenoxid- und Propylenoxideinheiten besteht und eine Hydroxyläquivalentmasse von 2150 hat, (CAS-Nr. 52624-57-4) als Bestandteil b) sowie eines Polypropylenglycols mit einer Hydroxyläquivalentmasse von 200 und einer Hydroxylfunktionalität von 2 (CAS-Nr. 25322-69-4) als Bestandteil c) hergestellt. Nach 4 Wochen kann der in Tabelle 1 jeweils angegebene Homogenitätsgrad für die Polyolkomponenten der verschiedenen Zusammensetzungen festgestellt werden:

**Tabelle 1**

| | | | | | | | | | | | | |
|---|---|---|---|---|---|---|---|---|---|---|---|---|
| - ≙ Phasentrennung/o ≙ trübe ohne Phasentrennung/ + ≙ klar ohne Phasentrennung | | | | | | | | | | | | |

| Gew.-Teile | Gew.-Teile Polypropylenglycol | | | | | | | | | | | |
|---|---|---|---|---|---|---|---|---|---|---|---|---|
| | - | | 0,5 | | 1,0 | | 1,5 | | 2,0 | | 2,5 | |
| Bestandteil b) | 50°C | RT | 50°C | RT | 50°C | RT | 50°C | RT | 50°C | RT | 50°C | RT |
| 0,5 | + | o | + | o | + | o | + | o | + | o | + | + |
| 1,0 | - | - | - | - | + | o | + | o | + | o | + | + |
| 1,5 | - | - | - | - | - | - | + | o | + | o | + | + |
| 2,0 | - | - | - | - | - | - | + | o | + | o | + | + |
| 2,5 | - | - | - | - | - | - | + | o | + | o | + | + |
| 3,0 | - | - | - | - | - | - | - | o | + | - | + | + |

Beispiel 2: Es wird eine Polyolkomponente durch Vermischen folgender Bestandteile hergestellt:

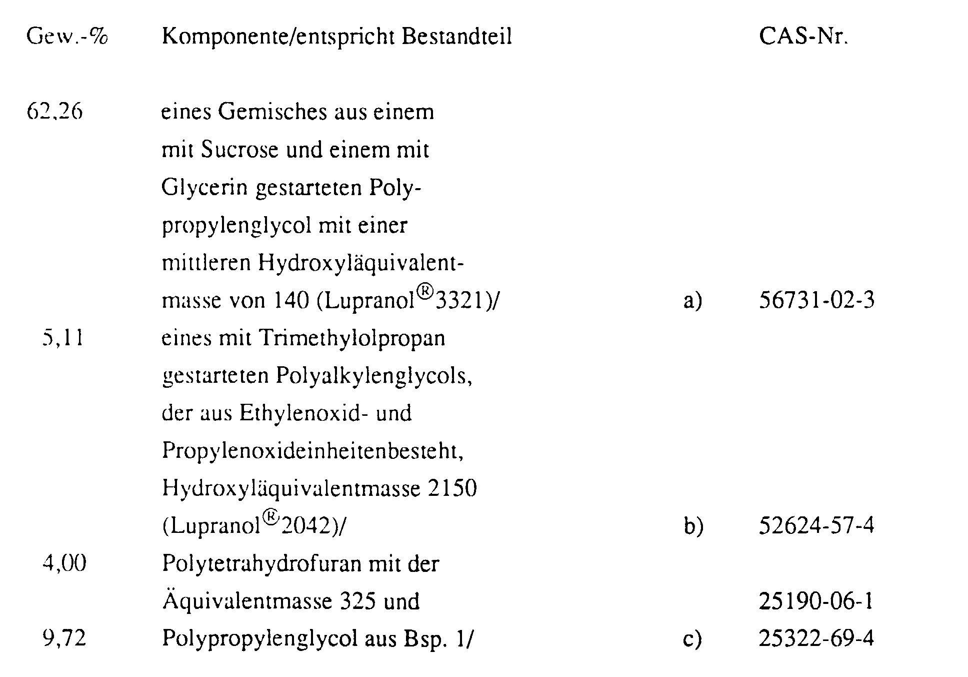

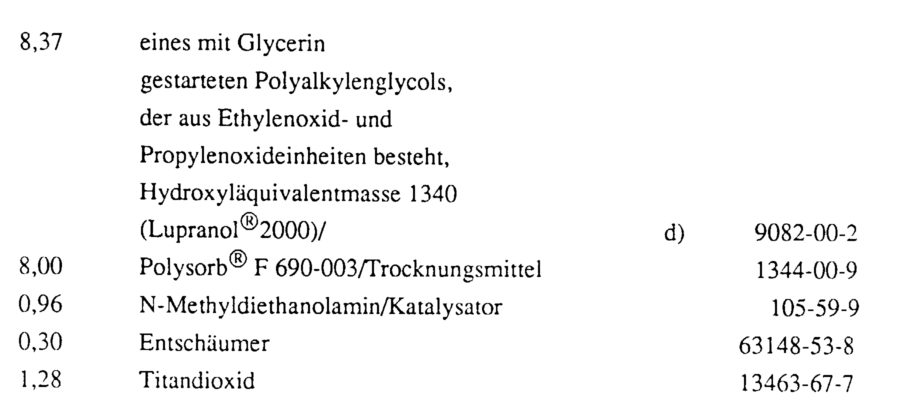

Es handelt sich bei dem Gemisch um eine weisse Flüssigkeit der Dichte 1,08 g/ml (20 °C) mit einer Viskosität von 2240 mPa·s (25 °C). Diese kann mindestens sechs Monate bei Raumtemperatur gelagert werden, ohne dass sich mehrere Flüssigphasen ausbilden.

Beispiel 3: Eine weitere Polyolkomponente wird durch Vermischen folgender Bestandteile hergestellt:

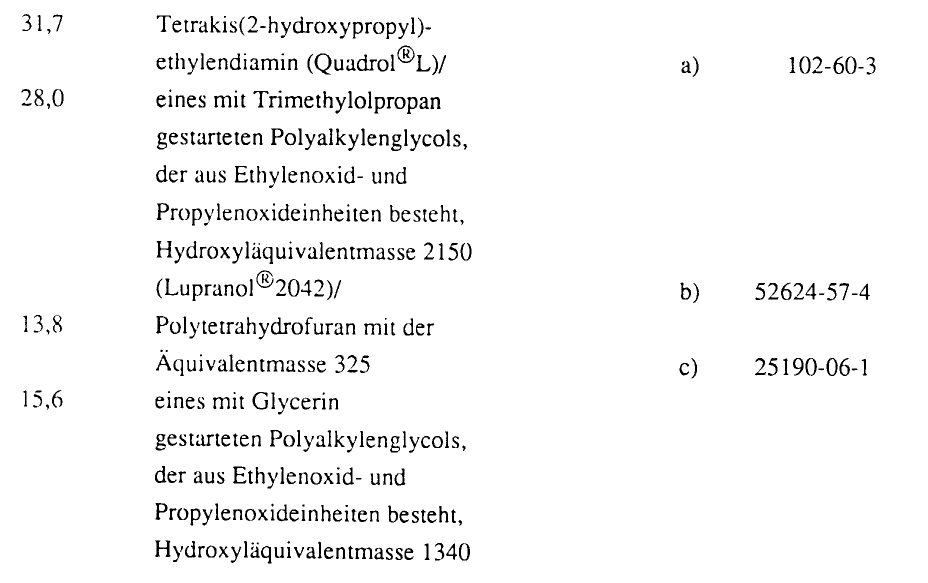

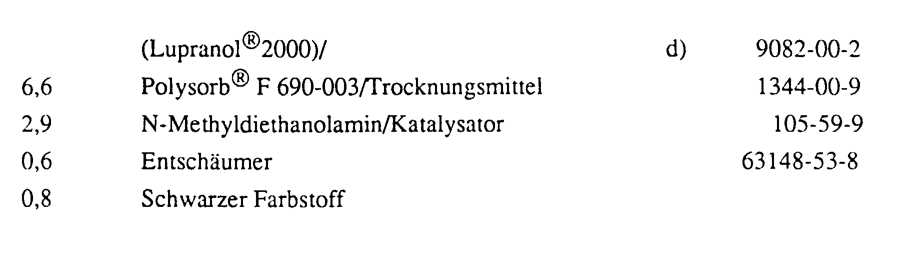

Es handelt sich bei dem Gemisch um eine schwarze Flüssigkeit der Dichte 1,01 - 1,03 g/ml (25 °C) mit einer Viskosität von 1550 - 1750 mPa·s (25 °C). Sie hat einen Flammpunkt von 172 °C (DIN 51758) und kann ebenfalls einige Monate bei Raumtemperatur gelagert werden, ohne dass sich mehrere Flüssigphasen ausbilden.

Beispiel 4: Eine Polyisocyanatkomponente wird aus 70 Gew.-% Desmodur® CD (teilweise carbodiimidisiertes Diisocyanatodiphenylmethan) und 30 Gew.-% Desmodur® VL 50 (technisches Diisocyanatodiphenylmethan) hergestellt. Diese Isocyanatkomponente weist eine Dichte von 1,22 g/ml und eine Viskosität von 30 mPa·s auf.

Sie wird von Hand in einem Gewichtsverhältnis von 77 zu 100 mit der Polyolkomponente aus Beispiel 2 vermischt. Die erhaltene Mischung hat eine Topfzeit von 25 Minuten und eignet sich somit gut zum Vergiessen von Hand. Durch Härtung der Mischung erhält man ein Polyurethanmaterial mit den in Tabelle 2 angeführten Eigenschaften.

Beispiel 5: Rohes technisches Diisocyanatodiphenylmethan (Gemisch) als Polyisocyanatkomponente wird maschinell im Gewichtsverhältnis 80 zu 100 mit der Polyolkomponente aus Beispiel 3 vermischt. Die erhaltene Mischung hat eine Topfzeit von 40 Sekunden und wird nach dem Reaktionsspritzgussverfahren zu Formikörpern verarbeitet. Dabei erhält man ein Polyurethanmaterial mit den in Tabelle 2 angeführten Eigenschaften.

Ein weiterer Teil der Reaktionsmischung wird zu mehreren streifenförmigen Formkörpern mit der Abmessung von 100 x 40 x 1 Millimeter vergossen. Nach ca. 5 Minuten bei Raumtemperatur hat das Formkörpermaterial etwa eine Shore-D Härte von 20 und kann gerade entformt werden. Das Material wird auf eine eventuell auftretende Sprödigkeit während der Härtungphase getestet, indem man zunächst einen ersten der Streifen sofort nach der Entformung etwa in der Mitte des Streifens um 90 ° abbiegt, wobei die Biegeachse parallel zur 40 Millimeter breiten Seite des Streifens verläuft. Die anderen Streifen lässt man danach im entformten Zustand bei Raumtemperatur weiter härten. Während der folgenden Stunde wird nach jeweils weiteren 5 Minuten der oben geschilderte Test mit einem anderen der Streifen durchgeführt. Es tritt in keinem Fall ein Bruch auf.

Beispiel 6: Die in Beispiel 4 verwendete Polyisocyanatkomponente wird maschinell im Gewichtsverhältnis 77 zu 100 mit der Polyolkomponente aus Beispiel 3 vermischt. Die erhaltene Mischung hat eine Topfzeit von 55 Sekunden und wird wie in Beispiel 5 nach dem Reaktionsspritzgussverfahren zu Formkörpern verarbeitet, wobei ein Polyurethanmaterial mit den in Tabelle 2 angeführten Eigenschaften erhalten wird.

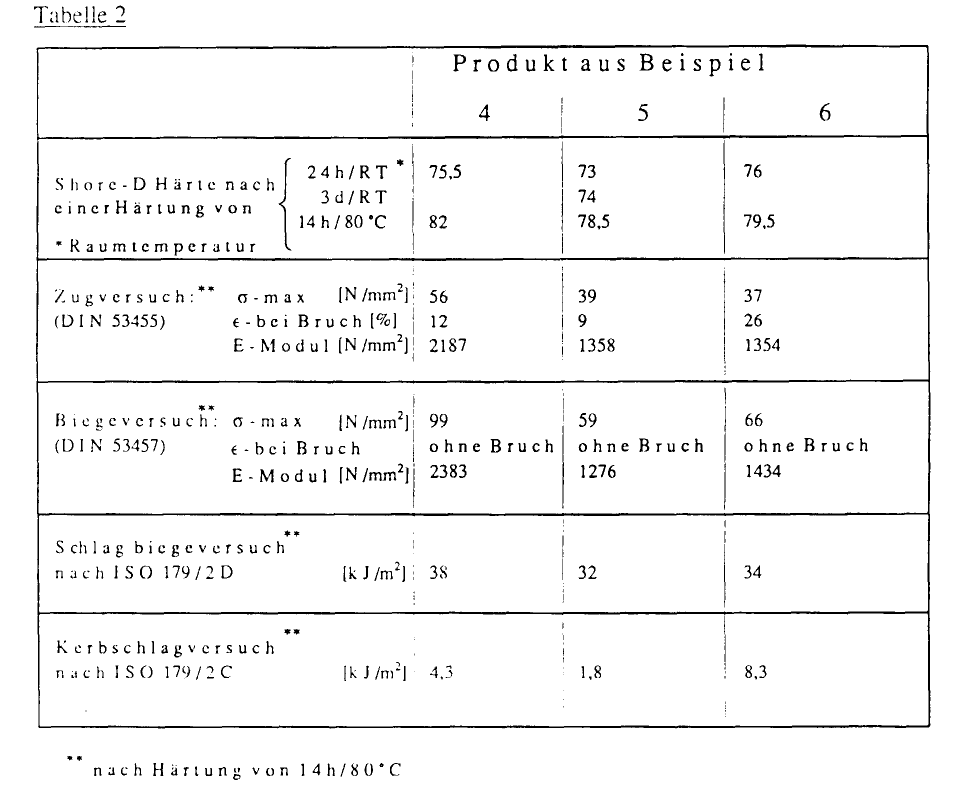

Eine Sprödphase während der Härtung kann auch bei keinem der in den Beispielen 4 und 6 verwendeten Reaktionsgemische festgestellt werden.

Beispiel 7: Es wird eine Polyolkomponente durch Vermischen folgender Bestandteile hergestellt:

| Gew.-% | Komponente/entspricht Bestandteil | | CAS-Nr. |
|---|---|---|---|
| 62,26 | eines Gemisches aus einem mit Sucrose und einem mit Glycerin gestarteten Polypropylenglycol mit einer mittleren Hydroxyläquivalentmasse von 140 (Lupranol®3321)/ | a) | 56731-02-3 |
| 6 | eines mit Trimethylolpropan gestarteten Polyalkylenglycols, der aus Ethylenoxid- und Propylenoxideinheitenbesteht, Hydroxyläquivalentmasse 2150 (Lupranol®2042)/ | b) | 52624-57-4 |
| 13,7 | Polypropylenglycol mit einer Hydroxyläquivalentmasse von 200 (Funktionalität 2)/ | c) | |
| 8,37 | eines mit Glycerin gestarteten Polyalkylenglycols, der aus Ethylenoxid- und Propylenoxideinheiten besteht Hydroxyläquivalentmasse 1340, (Lupranol® 2000/ | d) | 9082-00-2 |
| 8,00 | Polysorb® F 690-003/Trocknungsmittel | | 1344-00-9 |
| 0,96 | N-Methyldiethanolamin/Katalysator | | 105-59-9 |
| 0,30 | Entschäumer | | 63148-53-8 |

Die Polyolkomponente wird von Hand in einem Gewichtsverhältnis von 100 zu 80 mit einer Polyisocyanatkomponente, wie sie in Beispiel 4 beschrieben wurde, vermischt. Die erhaltene Mischung hat eine Topfzeit von 32 Minuten und eignet sich somit gut zum Vergiessen von Hand. Durch Härtung der Mischung erhält man ein Polyurethanmaterial mit den in Tabelle 3 angeführten Eigenschaften.

Beispiel 8: Es wird eine Polyolkomponente durch Vermischen folgender Bestandteile hergestellt:

| Gew.-% | Komponente/entspricht Bestandteil | | CAS-Nr. |
|---|---|---|---|
| 62,26 | eines Gemisches aus einem mit Sucrose und einem mit Glycerin gestarteten Polypropylenglycol mit einer mittleren Hydroxyläquivalentmasse von 140 (Lupranol®3321)/ | a) | 56731-02-3 |
| 6 | SAN-Polymer-polyol mit Hydroxyläquivalentmasse 2000, Molekularmasse 4000 (Polyurax®RP 1464)/ | b) | |
| 13,72 | Polypropylenglycol mit einer Hydroxyläquivalentmasse von 200 (Funktionalität 2)/ | c) | |
| 8,37 | eines mit Glycerin gestarteten Polyalkylenglycols, der aus Ethylenoxid- und Propylenoxideinheiten besteht, Hydroxyläquivalentmasse 1340 (Lupranol®2000)/ | d) | 9082-00-2 |
| 8,00 | Polysorb® F 690-003/Trocknungsmittel | | 1344-00-9 |
| 0,96 | N-Methyldiethanolamin/Katalysator | | 105-59-9 |
| 0,30 | Entschäumer | | 63148-53-8 |

Die Polyolkomponente wird von Hand in einem Gewichtsverhältnis von 100 zu 80 mit einer Polyisocyanatkomponente, wie sie in Beispiel 4 beschrieben wurde, vermischt. Die erhaltene Mischung hat eine Topfzeit von 30 Minuten. Durch Härtung der Mischung erhält man ein Polyurethanmaterial mit den in Tabelle 3 angeführten Eigenschaften.

Beispiel 9: Es wird eine Polyolkomponente durch Vermischen folgender Bestandteile hergestellt:

| Gew.-% | Komponente/entspricht Bestandteil | | CAS-Nr. |
|---|---|---|---|
| 62,26 | eines Gemisches aus einem mit Sucrose und einem mit Glycerin gestarteten Polypropylenglycol mit einer mittleren Hydroxyläquivalentmasse von 140 (Lupranol®3321)/ | a) | 56731-02-3 |
| 6 | Polyurethandispersions-Polyol mit Hydroxyläquivalentmasse 2000, Molekularmasse 6000 Desmophen®1920 D/ | b) | |
| 13,72 | Polypropylenglycol mit einer Hydroxyläquivalentmasse von 200 (Funktioalität 2)/ | c) | |
| 8,37 | eines mit Glycerin gestarteten Polyalkylenglycols, der aus Ethylenoxid- und Propylenoxideinheiten besteht, Hydroxyläquivalentmasse 1340 (Lupranol®2000)/ | d) | 9082-00-2 |
| 8,00 | Polysorb® F 690-003/Trocknungsmittel | | 1344-00-9 |
| 0,96 | N-Methyldiethanolamin/Katalysator | | 105-59-9 |
| 0,30 | Entschäumer | | 63148-53-8 |

Dic Polyolkomponente wird von Hand in einem Gewichtsverhältnis von 100 zu 80 mit einer Polyisocyanatkomponente, wie sie in Beispiel 4 beschrieben wurde, vermischt. Die erhaltene Mischung hat ebenfalls eine Topfzeit von 30 Minuten. Durch Härtung der Mischung erhält man ein Polyurethanmaterial mit den in Tabelle 3 angeführten Eigenschaften.

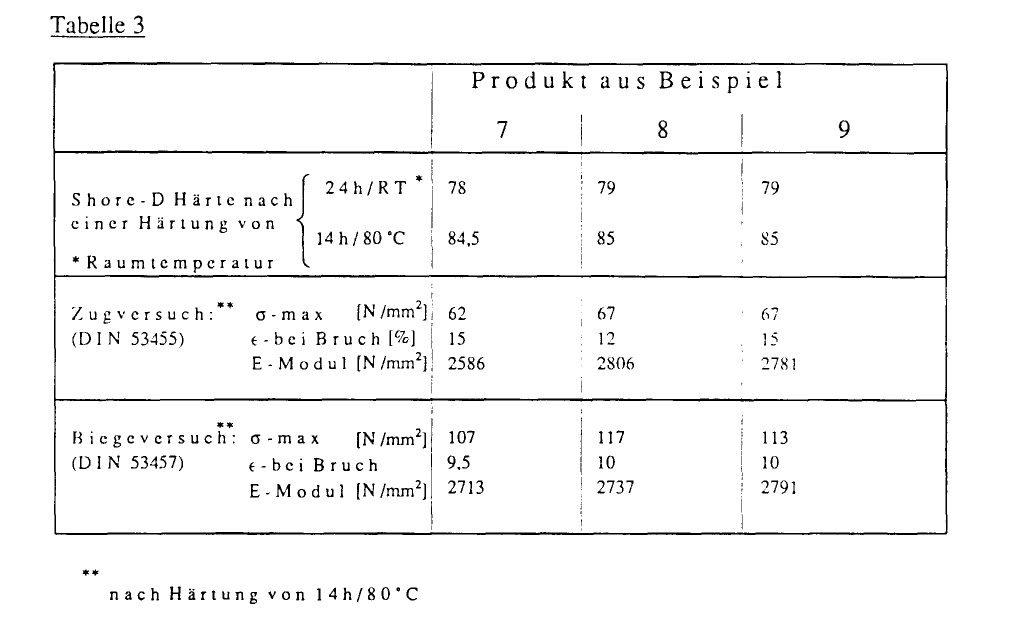

## Patentansprüche

1. Polyolkomponente, insbesondere für die Umsetzung mit Polyisocyanaten der Diphenylmethanreihe,
die
a) ein Polyol mit einer Hydroxyläquivalentmasse bis 150 und einer Funktionalität von 4 bis 8,
b) ein Polyetherpolyol mit einer Hydroxyläquivalentmasse über 1900 und einer Funktionalität von 2 bis 4 und
c) ein Polypropylenglycol mit einer Funktionalität von 2 bis 3 oder ein Polytetrahydrofuran, die jeweils eine Hydroxyläquivalentmasse von 150 bis 500 aufweisen, oder ein Gemisch der beiden enthält,
wobei es ausgeschlossen ist, dass die Polyolkomponente Ethylenglycol, Diethylenglycol oder 1,4-Butandiol enthält.

2. Polyolkomponente nach Anspruch 1, die als Bestandteil c) nur Polytetrahydrofuran enthält.

3. Polyolkomponente nach Anspruch 1, die als Bestandteil c) nur Polypropylenglycol enthält.

4. Polyolkomponente nach mindestens einem der Ansprüche 1 bis 3, die als weiteren Bestandteil d) noch ein Polyetherpolyol mit einer Funktionalität von 2 - 4 und einer Hydroxyläquivalentmasse enthält, die zwischen derjenigen der als Bestandteile b) und c) eingesetzten Polyetherpolyole liegt.

5. Reaktionsgemisch zur Herstellung von Polyurethanformkörpern, enthaltend ein Polyisocyanat der Diphenylmethanreihe und wenigstens eine Polyolkomponente nach mindestens einem der Ansprüche 1 bis 4, wobei die Menge von Polyisocyanat so gewählt ist, dass die Isocyanatkennzahl des Reaktionsgemisches (Quotient aus der Anzahl von Isocyanatgruppen und der Anzahl von mit Isocyanatgruppen reaktionsfähigen Gruppen im Reaktionsgemisch, multipliziert mit 100) zwischen 70 und 130 liegt.

6. Reaktionsgemisch nach Anspruch 5, das eine Polyisocyanatkomponente enthält, die aus 5 bis 20 Gew.-% carbodiimidisiertem Diisocyanatodiphenylmethan, 2 bis 10 Gew.-% Diisocyanatodiphenylmethan-Polymertypen der allgemeinen Formel OCN-[C₆H₄]-CH₂-[[-[C₆H₃(NCO)]-CH₂-]]ₙ-[C₆H₄]-NCO, worin n ≥ 1 ist, und 70 bis 93 Gew.-% eines Gemisches aus monomeren Diisocyanatodiphenylmethanisomeren besteht, wobei dieses Gemisch wiederum aus 45 bis 90 Gew.-% 4,4'-Diisocyanatodiphenylmethan und 10 bis 55 Gew.-% 2,4'- und 2,2'-Diisocyanatodiphenylmethan besteht.

7. Reaktionsgemisch nach Anspruch 5 oder 6, das N-Methyldiethanolamin als Katalysator enthält.

8. Reaktionsgemisch nach mindestens einem der Ansprüche 5 bis 7, das wenigstens zwei verschiedene Polyolkomponenten nach mindestens einem der Ansprüche 1 bis 4 enthält, die, jeweils allein mit dem eingesetzten Polyisocyanat in einem Gemisch gleicher Isocyanatkennzahl verwendet, unterschiedliche maximale Verarbeitungszeiten ermöglichen, wobei das Reaktionsgemisch eine Verarbeitungszeit aufweist, die zwischen den mit den einzelnen Polyolkomponenten erreichbaren liegt.

9. Reaktionsgemisch nach Anspruch 8, bei dem die verschiedenen Polyolkomponenten verschiedenartig eingefärbt sind.

10. Verfahren zur Herstellung von Polyurethanformkörpern, bei dem eine Komponente auf Basis von Polyisocyanaten der Diphenylmethanreihe mit wenigstens einer der gegebenenfalls zuvor zwischengelagerten Polyolkomponenten gemäss mindestens einem der Ansprüche 1 bis 4 in einer Menge, dass die Isocyanatkennzahl des Reaktionsgemisches (Quotient aus der Anzahl von Isocyanatgruppen und der Anzahl von mit Isocyanatgruppen reaktionsfähigen Gruppen im Reaktionsgemisch, multipliziert mit 100) zwischen 70 und 130 liegt, und mit gegebenenfalls weiteren in der Polyurethantechnologie üblichen Zusatzstoffen zu einem Reaktionsgemisch nach mindestens einem der Ansprüche 1 bis 8 vermischt wird, die erhaltene Mischung geformt und zum Formkörper gehärtet wird.

11. Verfahren nach Anspruch 10, bei dem die Härtung etwa bei Raumtemperatur und ohne Erwärmung der eingesetzten Form erfolgt.

12. Polyurethanformkörper, erhältlich aus einem Reaktionsgemisch nach mindestens einem der Ansprüche 5 bis 9.

13. Polyurethanformkörper nach Anspruch 12, der keinen freien Weichmacher enthält.

## Claims

1. A polyol component, in particular for reaction with a polyisocyanate of the diphenylmethane series, which comprises
a) a polyol having a hydroxyl equivalent weight of up to 150 and a functionality of 4 to 8,
b) a polyether-polyol having a hydroxyl equivalent weight of more than 1900 and a functionality of 2 to 4 and
c) a polypropylene glycol having a functionality of 2 to 3, or a polyte«ahydrofuran, each of which has a hydroxyl equivalent weight of 150 to 500, or a mixture of the two,
it being impossible for the polyol component to comprise ethylene glycol, diethylene glycol or 1,4-butanediol.

2. A polyol component according to claim 1, wherein constituent c) is exclusively polytetrahydrofuran.

3. A polyol component according to claim 1, wherein constituent c) is exclusively polypropylene glycol.

4. A polyol component according to at least one of claims 1 to 3, wherein, as a further constituent d), a polyether-polyol having a functionality of 2-4 and a hydroxyl equivalent weight between those of the polyether-polyols employed as constituents b) and c) is also present.

5. A reaction mixture for the production of a polyurethane moulding, comprising a polyisocyanate of the diphenylmethane series and at least one polyol component according to at least one of claims 1 to 4, the amount of polyisocyanate being chosen such that the isocyanate coefficient of the reaction mixture (quotient of the number of isocyanate groups and the number of groups which can react with isocyanate groups in the reaction mixture, multiplied by 100) is between 70 and 130.

6. A reaction mixture according to claim 5, which comprises a polyisocyanate component which comprises 5 to 20% by weight of a carbodiimidised diisocyanatodiphenylmethane, 2 to 10% by weight of a diisocyanatodiphenylmethane polymer type of the general formula OCN-[C₆H₄]-CH₂-[[-[C₆H₃(NCO)]-CH₂-]]ₙ-[C₆H₄]-NCO, in which n ≥ 1, and 70 to 93% by weight of a mixture of monomeric diisocyanatodiphenylmethane isomers, this mixture in turn consisting of 45 to 90% by weight of 4,4'-diisocyanatodiphenylmethane and 10 to 55% by weight of 2,4'- and 2,2'-diisocyanatodiphenylmethane.

7. A reaction mixture according to claim 5 or 6, wherein the catalyst is N-methyldiethanolamine.

8. A reaction mixture according to at least one of claims 5 to 7, which comprises at least two different polyol components according to at least one of claims 1 to 4, each of which when used alone, with the polyisocyanate employed, in a mixture of the same isocyanate coefficient allows different maximum processing times, the reaction mixture having a processing time which is between those which can be achieved with the individual polyol components.

9. A reaction mixture according to claim 8, in which the different polyol components are coloured differently.

10. A process for the production of a polyurethane moulding, in which a component based on a polyisocyanate of the diphenylmethane series is mixed with at least one of the polyol components according to at least one of claims 1 to 4, which has been intermediately stored beforehand if appropriate, in an amount such that the isocyanate coefficient of the reaction mixture (quotient of the number of isocyanate groups and the number of groups which can react with isocyanate groups in the reaction mixture, multiplied by 100) is between 70 and 130, and if appropriate with other additives customary in polyurethane technology to give a reaction mixture according to at least one of claims 1 to 8, and the resulting mixture is moulded and cured to give the moulding.

11. The process according to claim 10, in which the curing is carried out at about room temperature and without heating the mould employed.

12. A polyurethane moulding obtainable from a reaction mixture according to at least one of claims 5 to 9.

13. A polyurethane moulding according to claim 12, which contains no free plasticiser.

## Revendications

1. Composant polyol, destiné notamment à réagir avec des polyisocyanates de la famille du diphénylméthane, contenant les ingrédients suivants:
a) un polyol ayant une masse équivalente hydroxyle allant jusqu'à 150 et une fonctionnalité comprise entre 4 et 8;
b) un polyétherpolyol ayant une masse équivalente hydroxyle supérieure à 1900 et une fonctionnalité comprise entre 2 et 4; et
c) un polypropylène glycol avec une fonctionnalité de 2 à 3 ou un polytétrahydrofurane présentant l'un et l'autre une masse équivalente hydroxyle comprise entre 150 et 500, ou bien un mélange des deux,
étant exclu que le composant polyol contienne de l'éthylène glycol, du diéthylène glycol ou du 1,4-butane diol.

2. Composant polyol selon la revendication 1, contenant un polytétrahydrofurane comme ingrédient (c).

3. Composant polyol selon la revendication 1, contenant uniquement du polypropylène glycol comme ingrédient (c).

4. Composant polyol selon l'une au moins des revendications 1 à 3, contenant comme ingrédient (d) supplémentaire un polyétherpolyol avec une fonctionnalité de 2 à 4 et une masse équivalente hydroxyle intermédiaire entre celles des polyétherpolyols utilisés comme ingrédients (b) et (c).

5. Mélange réactionnel destiné à la fabrication d'articles moulés en polyuréthane, contenant un polyisocyanate de la famille du diphénylméthane et au moins un composant polyol selon l'une au moins des revendications 1 à 4, la quantité de polyisocyanate étant choisie de manière à avoir un indice d'isocyanate (quotient du nombre de groupes isocyanate sur le nombre de groupes capables de réagir avec les groupes isocyanate dans le mélange réactionnel, multiplié par 100) compris entre 70 et 130.

6. Mélange réactionnel selon la revendication 5, contenant un composant polyisocyanate composé de 5 à 20% en poids de diisocyanatodiphénylméthane carbodiimidisé, de 2 à 10% en poids de types de polymères de diisocyanatodiphénylméthane de formule générale OCN-[C₆H₄]-CH₂-{[C₆H₃(NCO)]-CH₂-}ₙ-[C₆H₄]-NCO, avec n ≥ 1, et de 70 à 93% en poids d'un mélange d'isomères de diisocyanatodiphénylméthane monomères, ledit mélange étant lui-même composé de 45 à 90% en poids de 4,4'-diisocyanatodiphénylméthane et de 10 à 55% en poids de 2,4'- et de 2,2'-diisocyanatodiphénylméthane.

7. Mélange réactionnel selon la revendication 5 ou la revendication 6, contenant de la N-méthyldiéthanolamine comme catalyseur.

8. Mélange réactionnel selon l'une des revendications 5 à 7, contenant au moins deux composants polyols différents qui, lorsqu'ils sont respectivement employés seuls avec le polyisocyanate utilisé dans un mélange ayant le même indice d'isocyanate, permettent des temps de traitement maximum différents, le mélange réactionnel présentant un temps de traitement qui se situe entre les temps qu'il est possible d'obtenir avec chaque composant polyol utilisé seul.

9. Mélange réactionnel selon la revendication 8, dans lequel les différents composants polyols sont teintés de manière différente.

10. Procédé de fabrication d'articles moulés en polyuréthane, dans lequel un composant à base de polyisocyanates de la famille du diphénylméthane est mélangé à au moins un composant polyol selon l'une des revendications 1 à 4, ayant subi le cas échéant auparavant un stockage intermédiaire, dans une quantité choisie de manière à ce que l'indice d'isocyanate du mélange réactionnel (quotient du nombre de groupes isocyanate sur le nombre de groupes capables de réagir avec les groupes isocyanate dans le mélange réactionnel, multiplié par 100) soit compris entre 70 et 130, et mélangé le cas échéant à d'autres additifs usuels dans la technologie des polyuréthanes afin d'obtenir un mélange réactionnel durcissable selon l'une des revendications 1 à 8, et dans lequel le mélange ainsi obtenu est formé et durci pour donner un article moulé.

11. Procédé selon la revendication 10, dans lequel le durcissement se fait à la température ambiante et sans chauffage du moule utilisé.

12. Article moulé en polyuréthane pouvant être obtenu à partir d'un mélange réactionnel selon l'une au moins des revendications 5 à 9.

13. Article moulé en polyuréthane selon la revendication 12, ne contenant aucun plastifiant libre.
